# EUROPEAN PATENT APPLICATION

(11) **EP 4 622 220 A1**
(43) Date of publication of application: **24.09.2025**
(21) Application number: 25164374.8
(22) Date of filing: 18.03.2025
(51) Int. Cl.: H04L 67/00, H04L 43/0811, H04L 67/14, H04L 69/00, H04L 69/40

(54) **INFORMATION PROCESSING APPARATUS, INFORMATION PROCESSING METHOD, AND INFORMATION PROCESSING PROGRAM**

(30) Priority: 21.03.2024 JP 2024045016
(71) Applicant: Yokogawa Electric Corporation, Tokyo 180-8750 (JP)
(72) Inventor: TSUKADA, Kento, Musashino-shi, Tokyo, 180-8750, (JP)
(74) Representative: Winter, Brandl - Partnerschaft mbB

(57) **Abstract**

An information processing apparatus (3) includes a storage unit (13) that stores a correspondence relationship between identification information of a client device (2) connected to the information processing apparatus (3) through remote connection and identification information of a device server (4) to which the information processing apparatus (3) is connected, a disconnection checking unit (21) that detects a disconnection of the remote connection, and a disconnecting unit (22) that disconnects a connection between the information processing apparatus connected through the remote connection from the client device that has requested the disconnection and the device server based on the correspondence relationship when the disconnection is detected.

## Description

### FIELD

The present disclosure relates to an information processing apparatus, an information processing method, and an information processing program.

### BACKGROUND

Conventionally, monitoring and control systems including a client computer, a universal serial bus (USB) device server, a USB device such as an operation keyboard connected to the USB device server, and an information processing apparatus (that may be a virtual machine) have been known.

In such a monitoring and control system, a user establishes a remote desktop connection to the information processing apparatus and, uses a USB device and a client computer through the information processing apparatus, to monitor and control a plant.
Patent document 1: Japanese Laid-open Patent Publication No. 2008-210115
Patent document 2: Japanese Laid-open Patent Publication No. 2010-97567

However, in the system described above, if the hardware of the client computer fails or the remote desktop connection is lost while a USB device connected to the USB server is operating, the USB device and the information processing apparatus remain connected. In this case, because the USB device is connected to the information processing apparatus and is operating, the USB device can increase risks associated with the monitoring and control system managed by the information processing apparatus.

### SUMMARY

According to an aspect of an embodiment, an information processing apparatus includes a memory stores a correspondence relationship between identification information of a client device connected to the information processing apparatus through remote connection and identification information of a device server to which the information processing apparatus is connected, a processor coupled to the memory and the processor configured to: detect a disconnection of the remote connection; and disconnect a connection between the information processing apparatus connected through the remote connection from the client device that has requested the disconnection and the device server based on the correspondence relationship when the disconnection is detected.

### BRIEF DESCRIPTION OF THE DRAWINGS

FIG. 1 is a diagram illustrating a configuration of a disconnection/connection system of a USB device server according to the embodiment;
FIG. 2 is a diagram illustrating an example of a configuration of a server according to the embodiment;
FIG. 3 is a diagram illustrating an example of a correspondence relationship among a client, the USB device server, and a state stored in a storage unit;
FIG. 4 is a flowchart illustrating a first operation when a server of the disconnection/connection system of the USB device server according to the embodiment disconnects the USB device server;
FIG. 5 is a flowchart illustrating a second operation when the server of the disconnection/connection system of the USB device server according to the embodiment disconnects the USB device server;
FIG. 6 is a flowchart illustrating a first operation when the server of the disconnection/connection system of the USB device server according to the embodiment connects the USB device server;
FIG. 7 is a flowchart illustrating a second operation when the server of the disconnection/connection system of the USB device server according to the embodiment connects the USB device server;
FIG. 8 is a diagram illustrating a state in which a server and the USB device server are connected when hardware of a client fails or when a communication line between the client and a server is disconnected;
FIG. 9 is a diagram illustrating a state in which the server of the embodiment has disconnected the communication line between the server and the USB device server;
FIG. 10 is a diagram illustrating a state in which the server of the embodiment has connected the communication line between the server and the USB device server; and
FIG. 11 is a diagram explaining a hardware configuration example.

### DESCRIPTION OF THE EMBODIMENTS

Hereinafter, exemplary embodiments of the present disclosure will be explained in detail with reference to the accompanying drawings. In the present specification and the drawings, an identical reference symbol is assigned to components having substantially identical function, and duplicated explanation will thereby be omitted.

First, details of the challenges of the embodiment will be explained. Although the present embodiment will be explained using a plant monitoring and control system as an example, the monitoring and control target is not limited to plants. For Example, it can also be applied to various systems utilizing remote control, such as internal systems, communication systems, and remote monitoring systems.

Conventional monitoring and control systems have following issues.
1. When the hardware of the client computer fails and, for example, a USB device such as an operation keyboard is still operating

In this case, the connection between the USB device and the information processing apparatus can still be intact. Therefore, there is a risk in the monitoring and control system in which the USB device could be operated (that is, plant operation) while the plant is not being monitored and, therefore, prompt action must be taken in response to hardware failures of the client computer. However, there is an issue that it takes time until an operator notices the failure of the client computer due to disappearance of a monitor display or when an action of checking the power of the client computer is taken.

2. When the remote desktop connection is lost while the USB device is still operating

In this case, the network communication near the client computer could have been disconnected. The user becomes aware of the disconnection of the remote desktop connection after a certain amount of time, through a disconnection notification dialog from the operating system (OS). Therefore, in this case also, there is a risk in the monitoring and control system, in which the USB device can be operated (that is, plant operation) while the plant is not being monitored. As a result, the user must respond promptly to the disconnection of the remote desktop.

The information processing apparatus of the embodiment quickly disconnects the connection between the USB device and the information processing apparatus when the hardware of the client computer fails, or when the remote desktop connection to the information processing apparatus is lost, while the USB device is still operating. Thus, the information processing apparatus of the embodiment prevents the occurrence of risks in the monitoring and control system, such as the operation of the USB device (that is, plant operation) while the plant is not being monitored.

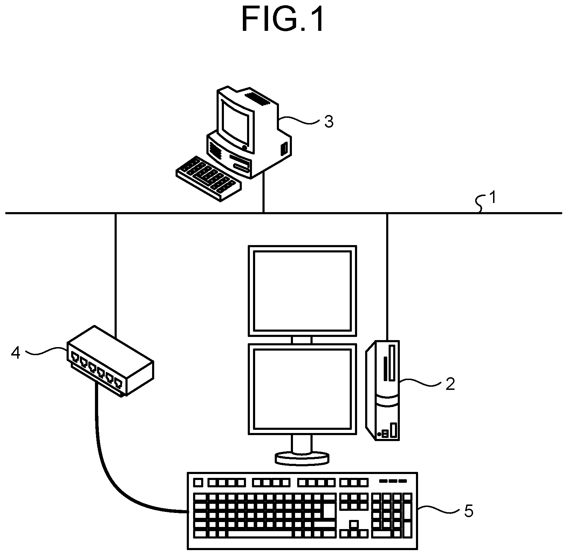

FIG. 1 is a diagram illustrating a configuration of a disconnection/connection system of the USB device server according to the embodiment. As illustrated in FIG. 1, to a network 1, a client 2, a server 3, and a USB device server 4 are connected.

The client 2 is a computer that performs control of a control system monitored by the server 3, and the like. The client 2 is, for example, a thin client computer. The thin client computer is an endpoint device specialized in use for virtual desktop environment.

The server 3 is connected through remote desktop connection from the client 2. The server 3 may be a virtual machine created in the server 3. The server 3 (or the virtual machine) stores, for example, software for control system monitoring.

To the USB device server 4, a USB device 5 is connected. The USB device 5 is, for example, an operation keyboard. The USB device server 4 connects the server 3 and the USB device 5. As a result, an operator operating the client 2 can operate the USB device connected to the server 3 through the remote desktop connection. In the embodiment, the USB device server 4 is described as an example, but a device (not illustrated) may be, for example, a device server (not illustrated) connected using a local area network (LAN) or other connection busses.

In the embodiment, a method of connecting the server 3 with the USB device server 4 having a correspondence relationship with the client 2 will be provided. Moreover, in the embodiment, a method of disconnecting the server 3 from the USB device server 4 having a correspondence relationship with the client 2 will be provided.

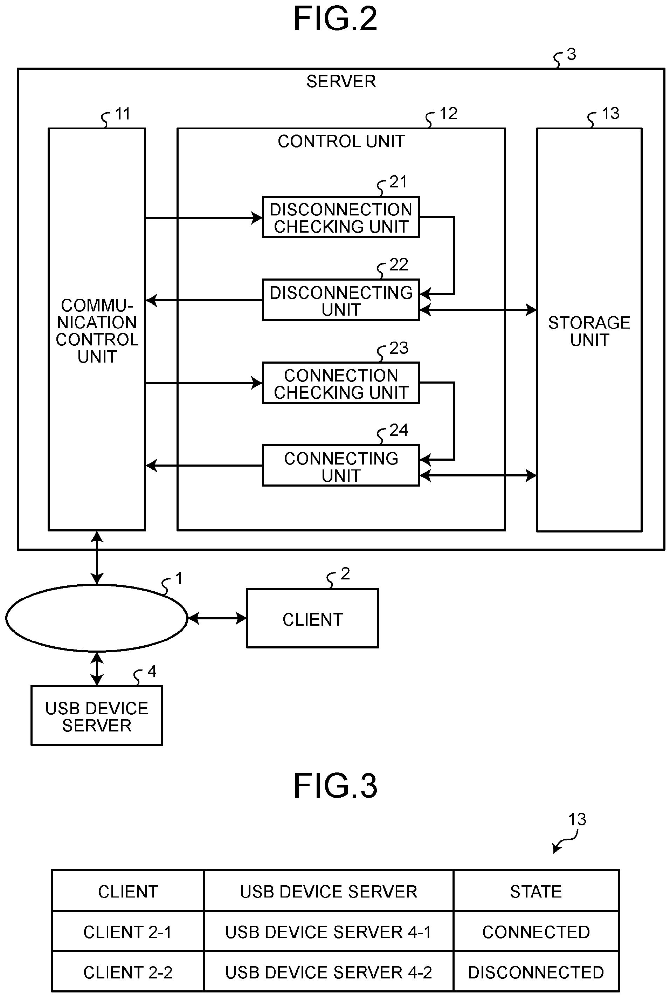

FIG. 2 is a diagram illustrating an example of a configuration of the server 3 according to the embodiment. As illustrated in FIG. 2, the server 3 includes a communication control unit 11, a control unit 12, and a storage unit 13. FIG. 3 is a diagram illustrating an example of a correspondence relationship among the client 2, the USB device server 4, and a state stored in the storage unit 13.

"State" herein indicates that both the client 2 and the USB device server 4 having the same correspondence relationship are connected to a server, or disconnected (not connected). As illustrated in FIG. 3, a client 2-1 and a USB device server 4-1 are in correspondence, and it is indicated that the state of the client 2-1 and the USB device server 4-1 is in a connected state. Moreover, a client 2-2 and a USB device server 4-2 are in correspondence, and it is indicated that the state of the client 2-2 and the USB device server 4-2 is in a disconnected state. Note that the correspondence relationship between the client 2-1 and the USB device server 4-1, and the correspondence relationship between the client 2-2 and the USB device server 4-2 are not limited to a one-to-one relationship, and may be a one-to-many relationship also.

Furthermore, as identification information of the client and the USB device server, for example, an internet protocol (IP) address is used. The storage unit 13 may store the USB device 5 connected to the USB device server 4 associating therewith, besides the client 2 and the USB device server 4. Thus, the server 3 can output an instruction relating to the USB device 5, to the USB device server 4. For example, the server 3 can instruct the USB device server 4 to activate a specific USB device 5 out of the USB devices 5 that are connected to the USB device server 4. Thus, the USB device server 4 can activates the specific USB device 5, and inactivates the other USB devices 5, receiving the instruction from the server 3.

Returning back to FIG. 2, the communication control unit 11 is responsible for controlling communications with devices outside the server 3. For example, the communication control unit 11 receives a command indicating remote desktop connection, a command indicating disconnection, an event indicating remote desktop connection, an event indicating disconnection, and the like from client 2. The communication control unit 11 can be implemented by a network interface card, just as an example.

The control unit 12 is a functional unit that performs overall control of the server 3. For example, the control unit 12 can be implemented by a hardware processor. As illustrated in FIG. 2, the control unit 12 includes a disconnection checking unit 21, a disconnecting unit 22, a connection checking unit 23, and a connecting unit 24. The control unit 12 may be implemented by hardwired logic or the like.

The disconnection checking unit 21 indicates disconnection of the remote desktop, and checks whether there are any logs output by the operating system of the server 3. This log checking is performed by checking logs of an operating system (OS) of the server 3. Moreover, the disconnection checking unit 21 indicates disconnection of the remote desktop, and checks whether an event notified to the operating system of the server 3 has been received. "Event" here in the present embodiment signifies a broader concept than a log indicating disconnection of remote desktop. For example, when the user intends to disconnect the remote desktop through various kinds of commands of the remote desktop, such various kinds of commands may be included in "event". Moreover, the disconnection checking unit 21 regularly checks whether there is a log indicating disconnection of the remote desktop.

The disconnecting unit 22 refers to the correspondence relationship stored in the storage unit 13 when it is found that there is a log indicating disconnection of the remote desktop, and disconnects the server 3 and the USB device server 4 corresponding to the client 2 of the source of the log indicating the disconnection of the remote desktop based on the "state" of the referred correspondence relationship. Moreover, the disconnecting unit 22 refers to the correspondence relationship stored in the storage unit 13 when there is an event indicating disconnection of the remote desktop, and disconnects the server 3 and the USB device server 4 corresponding to the client 2 of the source of the event indicating the disconnection of the remote desktop based on the "state" of the referred correspondence relationship.

The connection checking unit 23 checks whether there is a log indicating connection of the remote desktop, output by the operating system of the server 3. This log checking is performed by checking logs of the OS of the server 3 similarly to the disconnection checking unit 21. Furthermore, the connection checking unit 23 checks whether an event indicating connection of the remote desktop, that is notified to the operating system of the server 3 is received. Moreover, the connection checking unit 23 regularly checks whether there is a log indicating connection of the remote desktop.

The connecting unit 24 refers to the correspondence relationship stored in the storage unit 13 when it is found that there is a log indicating connection of the remote desktop, and connects the server 3 and the USB device server 4 corresponding to the client 2 of the source of the log indicating the connection of the remote desktop based on the "state" of the referred correspondence relationship. Moreover, the connecting unit 24 refers to the correspondence relationship stored in the storage unit 13 when there is an event indicating connection of the remote desktop, and connects the server 3 and the USB device server 4 corresponding to the client 2 of the source of the event indicating the connection of the remote desktop based on the "state" of the referred correspondence relationship.

For example, suppose that two correspondence relationships, [client A, USB device server A, state A] and [client B, USB device server B, state B] are stored in the storage unit 13. In this case, when the client A establishes a remote desktop protocol (RDP) connection, if the state A corresponding to the client A stored in the storage unit 13 indicates a disconnected state, the USB device server A and the server 3 are connected, and the state A is changed to "connected". Moreover, when the client B establishes the RDP connection, if the state B corresponding to the client B stored in the storage unit 13 indicates a disconnected state of the client B and the USB device server B, the USB device server B and the server 3 are connected, and the state B is changed to "connected".

Next, an operation of the disconnection/connection system of the USB device server 4 according to the embodiment will be explained.

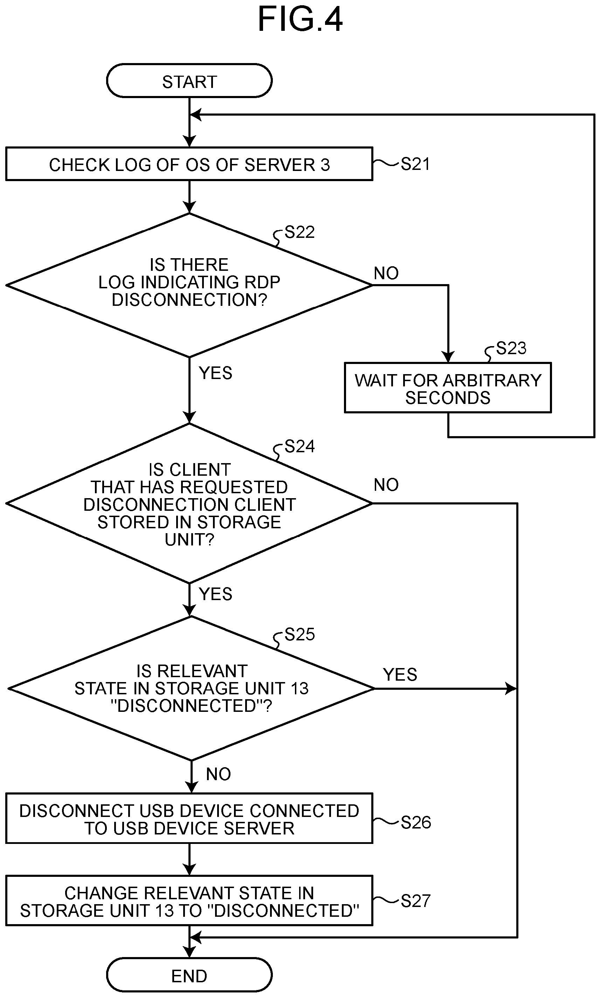

A first operation when the server 3 of the disconnection/connection system of the USB device server 4 according to the embodiment disconnects the USB device server 4 will be explained. FIG. 4 is a flowchart indicating the first operation when the disconnection/connection system of the USB device server 4 according to the embodiment disconnects the USB device server 4.

As illustrated in FIG. 4, the control unit 12 checks logs of the OS of the server 3 (step S21). The control unit 12 determines whether there is a log indicating RDP disconnection in logs of the OS of the server 3 (step S22).

When it is determined that there are no logs indicating disconnection in the logs of the OS of the server 3 (step S22: NO), the control unit 12 waits for arbitrary seconds (for example, 0.5 seconds) (step S23), and returns to step S21.

When there is a log indicating disconnection is present in the logs of the OS of the server 3 (step S22: YES), the control unit 12 determines whether the client that has requested disconnection of the remote desktop protocol is a client stored in the storage unit 13 (step S24).

When the client 2 that has requested the disconnection of the remote desktop protocol is not a client stored in the storage unit 13 (step S24: NO), the control unit 12 ends the processing.

When the client 2 that has requested the disconnection of the remote desktop protocol is a client stored in the storage unit 13 (step S24: YES), the control unit 12 determines whether the "state" corresponding to the client 2 and the USB device server 4 stored in the storage unit 13 is "disconnected" (step S25). When it is determined that the state is "disconnected" (step S25: YES), the processing is ended because the client 2 of a corresponding set (the client 2 and the USB device server 4) and the server 3 have already been disconnected.

When it is determined that the "state" corresponding to the client 2 and the USB device server 4 stored in the storage unit 13 is "connected" (step S25: NO), the control unit 12 disconnects the USB device 5 connected to the USB device server 4 from the server 3 (step S26), and changes the "state" to "disconnected" (step S27, to end the processing. In the disconnection at this step S26), the control unit 12 refers to the correspondence relationship stored in the storage unit 13, and disconnects the USB device server 4 corresponding to the client 2 of the source of the log indicating the remote desktop disconnection and the server 3. As a result, the USB device connected to the USB device server 4 is disconnected from the server 3 through the USB device server 4.

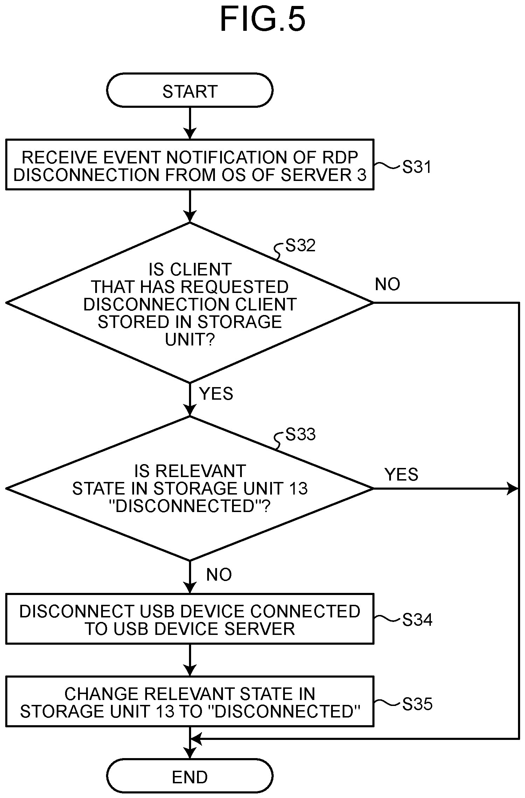

Next, a second operation when the server 3 of the disconnection/connection system of the USB device server 4 according to the embodiment disconnects the USB device server 4 will be explained. FIG. 5 is a flowchart illustrating the second operation when the server 3 of the disconnection/connection system of the USB device server 4 according to the embodiment disconnects the USB device server 4.

As illustrated in FIG. 5, the control unit 12 receives an event notification of the RDP disconnection from the OS of the server 3 (step S31). The control unit 12 determines whether the client 2 that has requested the disconnection is the client 2 stored in the storage unit 13 (step S32).

When the client 2 that has requested the disconnection is not the client 2 stored in the storage unit 13 (step S32: NO), the control unit 12 ends the processing.

When the client 2 that has requested the disconnection is the client 2 stored in the storage unit 13 (step S32: YES), the control unit 12 determines whether the "state" corresponding to the client 2 and the USB device server 4 stored in the storage unit 13 is "disconnected" (step S33). When it is determined that the state is "disconnected" (step S33: YES), the processing is ended because the client 2 of a corresponding set (the client 2 and the USB device server 4) and the server 3 have already been disconnected.

When it is determined that the "state" corresponding to the client 2 and the USB device server 4 stored in the storage unit 13 is "connected" (step S33: NO), the control unit 12 disconnects the USB device 5 connected to the USB device server 4 from the server 3 (step S34), and changes the "state" to "disconnected" (step S35), to end the processing. In the disconnection at this step S34, the control unit 12 refers to the correspondence relationship stored in the storage unit 13, and disconnects the USB device server 4 corresponding to the client 2 of the source of the event indicating the remote desktop disconnection and the server 3.

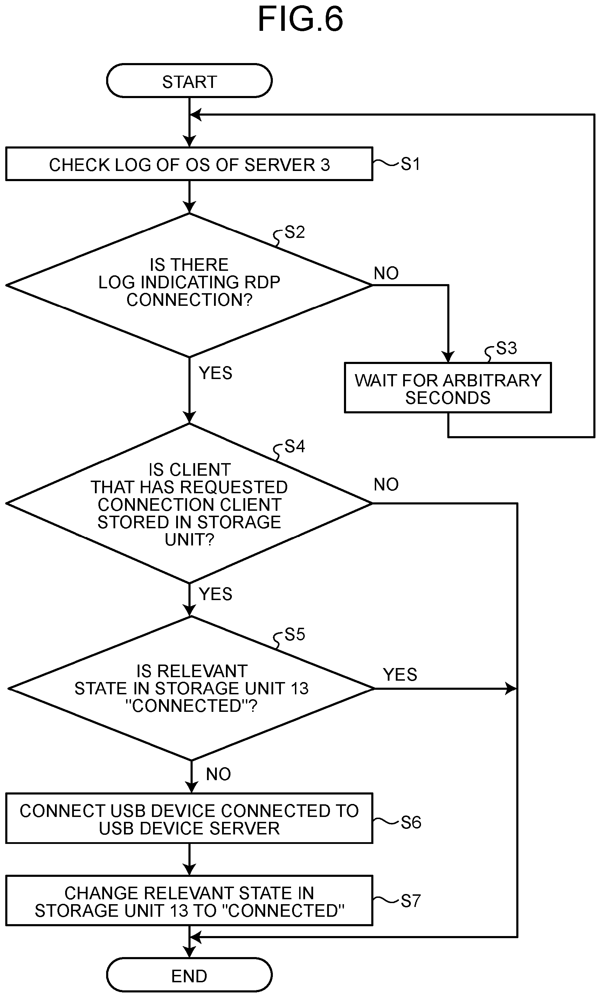

FIG. 6 is a flowchart illustrating a first operation when the server 3 of the disconnection/connection system of the USB device server 4 according to the embodiment connects the USB device server 4. As illustrated in FIG. 6, the control unit 12 checks logs of the OS of the server 3 (step S1). The control unit 12 determines whether there is a log indicating the connection of the remote desktop protocol in the log of the OS of the server 3 (step S2).

When it is determined that there are no logs indicating connection in the logs of the OS of the server 3 (step S2: NO), the control unit 12 waits for arbitrary seconds (for example, 0.5 seconds) (step S3), and returns to step S1.

When there is a log indicating connection is present in the logs of the OS of the server 3 (step S2: YES), the control unit 12 determines whether the client that has requested connection of the remote desktop protocol is a client stored in the storage unit 13 (step S4).

When the client 2 that has requested the connection of the remote desktop protocol is not a client stored in the storage unit 13 (step S4: NO), the control unit 12 ends the processing.

When the client 2 that has requested the connection of the remote desktop protocol is a client stored in the storage unit 13 (step S4: YES), the control unit 12 determines whether the "state" corresponding to the client 2 and the USB device server 4 stored in the storage unit 13 is "connected" (step S5). When it is determined that the state is "connected" (step S5: YES), the processing is ended because the client 2 of a corresponding set (the client 2 and the USB device server 4) and the server 3 have already been connected.

When it is determined that the "state" corresponding to the client 2 and the USB device server 4 stored in the storage unit 13 is "disconnected" (step S5: NO), the control unit 12 connects the USB device 5 connected to the USB device server 4 to the server 3 (step S6), and changes the "state" to "connected" (step S7), to end the processing. In the connection at this step S6, the control unit 12 refers to the correspondence relationship stored in the storage unit 13, and disconnects the USB device server 4 corresponding to the client 2 of the source of the log indicating the remote desktop connection and the server 3. As a result, the USB device 5 connected to the USB device server 4 is connected to the server 3 through the USB device server 4.

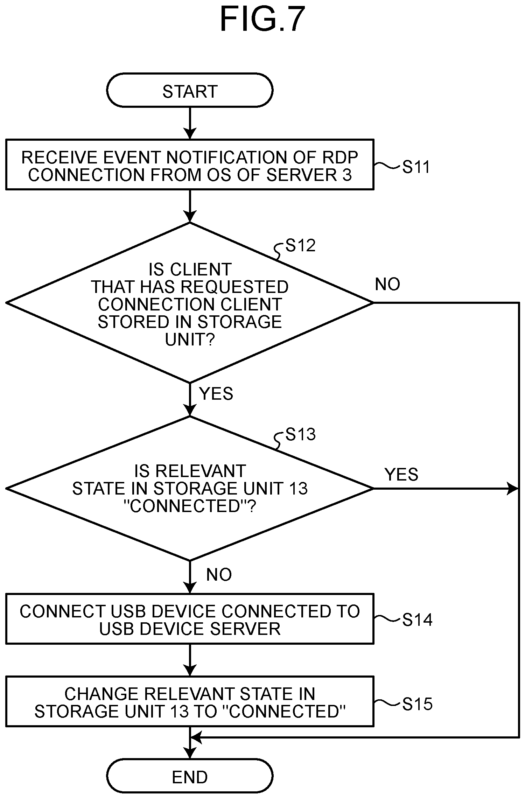

Next, a second operation when the server 3 of the disconnection/connection system of the USB device server 4 according to the embodiment connects the USB device server 4 will be explained. FIG. 7 is a flowchart illustrating the second operation when the server 3 of the disconnection/connection system of the USB device server 4 according to the embodiment connects the USB device server 4.

As illustrated in FIG. 7, the control unit 12 receives an event notification of the RDP connection from the OS of the server 3 (step S11). The control unit 12 determines whether the client 2 that has requested the connection is the client 2 stored in the storage unit 13 (step S12).

When the client 2 that has requested the connection is not the client 2 stored in the storage unit 13 (step S12: NO), the control unit 12 ends the processing.

When the client 2 that has requested the connection is the client 2 stored in the storage unit 13 (step S12: YES), the control unit 12 determines whether the "state" corresponding to the client and the USB device server 4 stored in the storage unit 13 is "connected" (step S13). When it is determined that the state is "connected" (step S13: YES), the processing is ended because the client 2 of a corresponding set (the client and the USB server) and the server 3 have already been connected.

When it is determined that the "state" corresponding to the client 2 and the USB device server 4 stored in the storage unit 13 is "disconnected" (step S13: NO), the control unit 12 connects the USB device 5 connected to the USB device server 4 to the server 3 (step S14), and changes the "state" to "connected" (step S15), to end the processing. In the connection at this step S14, the control unit 12 refers to the correspondence relationship stored in the storage unit 13, and connects the USB device server 4 corresponding to the client 2 of the source of the event indicating the remote desktop connection and the server 3.

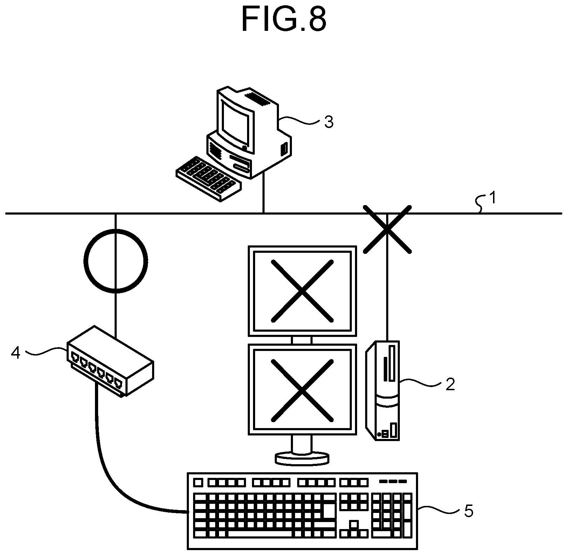

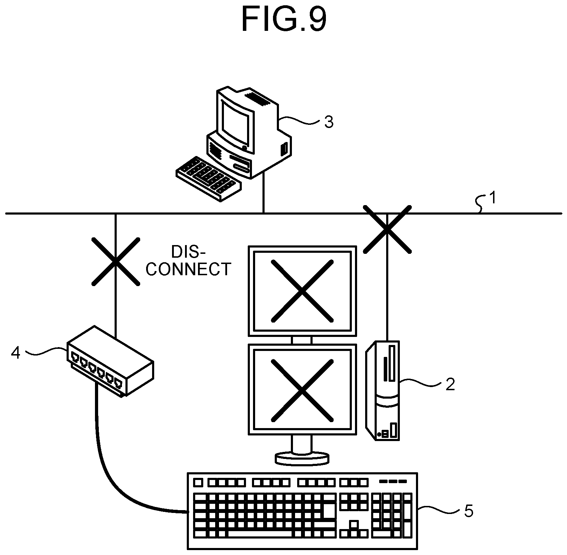

Next, an effect of the server 3 according to the embodiment will be explained, comparing a conventional technique and the present embodiment. Here, a point that an issue in a conventional technique illustrated in FIG. 8 is improved by processing of the server 3 according to the present embodiment illustrated in FIG. 9 will be explained.

First, a situation at remote desktop disconnection by the conventional technique will be explained. FIG. 8 is a diagram illustrating a state in which the server 3 and the USB device server 4 are connected in the case of a hardware failure of the conventional client 2, or a disconnection of a communication line between the client 2 and the server 3. In such a case, if a third party can operate the server 3 through some means, such as a remote desktop connection, there is a possibility that they could use USB Device 5 connected to the USB Device Server 4 (refer to FIG. 1) through the server 3 to perform operations on the system. Therefore, when the server 3 and the USB device server 4 are connected, it is necessary to disconnect the server 3 and the USB device server 4.

Next, improvement of an issue in FIG. 8 through processing of the server 3 according to the present embodiment will be explained using FIG. 9. FIG. 9 is a diagram illustrating a state in which the server 3 according to the embodiment has disconnected a communication line between the server 3 and the USB device server 4. As illustrated in FIG. 9, the server 3 disconnects the communication between the server 3 and the USB device server 4, triggered by disconnection of the remote connection from the client 2. That is, the server 3 is in a state in which the remote connection with the client 2 is disconnected, and the connection with the USB device server 4 is also disconnected. In this case, even if a third party operates the USB device 5 (whether intentionally or accidentally), because the communication line between the server 3 and the USB device server 4 is disconnected, it is possible to prevent a third party from operating the system using the USB device 5 connected to the USB device server 4 as in the conventional technique illustrated in FIG. 8.

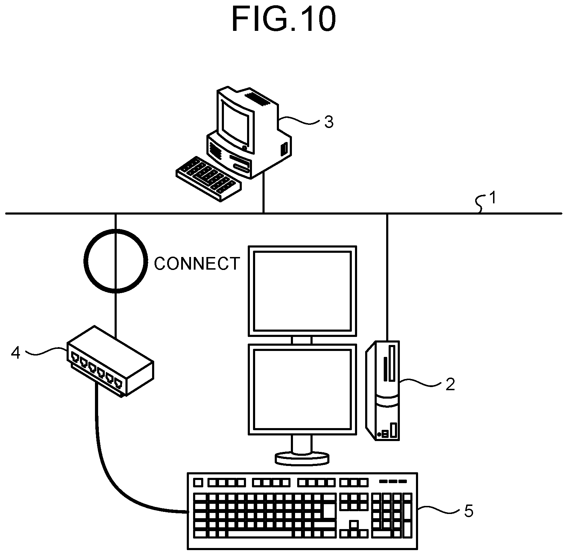

Next, an example in which the client 2 performs remote connection to the server 3 again from the state of FIG. 9 will be explained using FIG. 10. FIG. 10 is a diagram illustrating a state in which the server 3 of the embodiment has connected the communication line with the USB device server 4. After the communication line between the server 3 and the USB device server 4 is disconnected, the server of the embodiment checks, when connection of the communication line with the server 3 is instructed by the client 2, whether the client that has requested the connection is a client stored in the storage unit 13. The server 3 can connect the communication line between the server 3 and the USB device server 4 again as illustrated in FIG. 10 when the client 2 that requested the connection is a client stored in the storage unit 13. Therefore, the server 3 can connect the server 3 and the USB device server 4 corresponding to the client 2 easily, triggered by a reconnection request from the client 2, even when an unintended disconnection occurs with the client 2, and the USB device server 4 cannot be used because it has been disconnected from the server 3 by the disconnection/connection system of the USB device server 4 according to the embodiment. As a result, by automating the connection operation between the server 3 and the device server 5, this operation can be concealed from the user, thereby reducing a load on a user.

### Effect

Because the server 3 according to the embodiment disconnects connection between a client device (the client 2 in the embodiment) and a device server (the USB device server 4 in the embodiment) when a disconnection of the remote connection is detected, it is possible to reduce a risk of the system by an operation of the device (the USB device 5 in the embodiment). Moreover, in the first aspect, when a storage unit (the storage unit 13 in the embodiment) is viewed from a user (operator), the user can recognize a correspondence relationship stored in the storage unit as an interface of the system of the embodiment. Furthermore, in the first aspect, a wrong operation of the system not intended by the operator caused by an input operation to the device server or the like by the operator can be prevented because the device server corresponding to the client device and the server are disconnected.

In the second aspect of the server 3 according to the embodiment, it is possible to use a device regardless of whether a redirection function (function of redirecting a USB device connected to the client device to the server) is included in the client device.

The server 3 according to the embodiment can connect the server and the device by the remote desktop connection from the client device after the client device and the device server are disconnected.

As the server 3 according to the embodiment checks whether there is a log indicating disconnection of the remote connection is present regularly, it is possible to reduce a risk of the system caused by an operation of the device because the server and the device server are disconnected by the disconnection/connection system of the USB device server 4 according to the embodiment before the user operates the device.

Because the server 3 according to the embodiment regularly performs the above check whether there is a log indicating the remote connection is present, device connection can be restored promptly, thereby improving the availability of the system.

The server 3 according to the embodiment can instruct the device server to perform control including the device by using identification information of the device.

The server 3 according to the embodiment can generalize identification information by using an IP address as the identification information.

Because the server 3 according to the embodiment determines whether to perform disconnection processing after checking a state, it is possible to omit the disconnection processing when the device server corresponding to the client device and the server have already been connected.

### Hardware

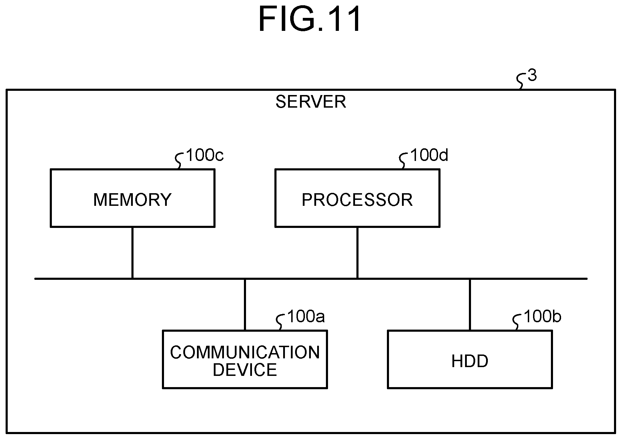

Next, a hardware configuration example of the server 3 will be explained. FIG. 11 is a diagram explaining a hardware configuration example.

As illustrated in FIG. 11, the server 3 includes a communication device 100a, an HDD 100b, a memory 110c, and a processor 100d. Moreover, respective components illustrated in FIG. 11 are connected to one another through a bus or the like.

The communication device 100a is a network interface card, or the like, and performs communication with an external device or apparatus. The HDD 100b stores a program and data to activate implement functions illustrated in FIG. 2.

The processor 100d reads out a program to perform processing similar to the respective processing units illustrated in FIG. 2 from the HDD 100b or the like, and loads it to the memory 100c, thereby running the processes to implement the respective functions explained in FIG. 2 and the like. For example, this process implements functions similar to the respective processing units included in the server 3. Specifically, the processor 100d reads out a program having functions similar to those of the disconnection checking unit 21, the disconnecting unit 22, the connection checking unit 23, and the connecting unit 24 from the HDD 100b and the like. The processor 100d then performs processes to perform the processing similar to the those of the disconnection checking unit 21, the disconnecting unit 22, the connection checking unit 23, and the connecting unit 24.

As described, the server 3 reads out and executes a program, to function as an information processing apparatus that performs an information processing method. Moreover, the server 3 can also implement the functions similar to those of the embodiment described above by reading out the program from a recording medium by a medium reader device, and by executing the read program. Furthermore, a program in other embodiments is not limited to be executed by the server 3. For example, the present invention can be applied also when other computers or servers execute the program, or when these execute the program in cooperation.

This program can be distributed through a network, such as the Internet. Moreover, this program can be recorded on a computer-readable recording medium, such as a hard disk, a flexible disk, a CD-ROM, a magneto-optical (MO) disk, and a digital versatile disc (DVD), and can be read out from the recording medium to be executed by a computer.

According to one embodiment, risks of a system caused by device operation can be reduced.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing apparatus (3) comprising:
a storage unit (13) that stores a correspondence relationship between identification information of a client device (2) connected to the information processing apparatus (3) through remote connection and identification information of a device server (4) to which the information processing apparatus (3) is connected;
a disconnection checking unit (21) that detects a disconnection of the remote connection; and
a disconnecting unit (22) that disconnects a connection between the information processing apparatus (3) connected through the remote connection from the client device (2) that has requested the disconnection and the device server (4) based on the correspondence relationship when the disconnection is detected.

2. The information processing apparatus according to claim 1, wherein
the disconnection checking unit (21) detects the disconnection based on any one of a log output by an operating system of the information processing apparatus (3), and an event notified by the operating system of the information processing apparatus (3).

3. The information processing apparatus according to claim 1 or 2, further comprising:
a connection checking unit (23) that detects a connection through the remote connection; and
a connecting unit (24) that connects the information processing apparatus (3) and the device server (4) through the remote connection from the client device (2) that has requested the connection based on the correspondence relationship when the connection is detected.

4. The information processing apparatus according to any one of claims 1 to 3, wherein
the disconnection checking unit (21) regularly performs the detection of the disconnection.

5. The information processing apparatus according to claim 3, wherein
the connection checking unit (23) regularly performs the detection of the connection.

6. The information processing apparatus according to any one of claims 1 to 5, wherein
the storage unit (13) stores a correlation relationship between the device server and identification information of a device connected to the device server.

7. The information processing apparatus according to any one of claims 1 to 6, wherein
the identification information of the client device (2) and the identification information of the device server (4) is an IP address.

8. The information processing apparatus according to any one of claims 1 to 7, wherein
the storage unit (13) stores a state indicating whether the information processing apparatus (3) connected through the remote connection from the client device (2) that has requested the connection and the device server (4) have been disconnected, and
the disconnecting unit (22) disconnects a connection between the information processing apparatus (3) and the device server (4) through the remote connection when the state indicates that the information processing apparatus (3) connected through the remote connection from the client device (2) that has requested the disconnection and the device server (4) have not been disconnected.

9. An information processing method carried out by a computer (3), comprising:
detecting a disconnection of a remote connection which connects an information processing apparatus to a client devise; and
disconnecting a connection between the information processing apparatus that is connected through the remote connection from the client device that has requested the disconnection and the device server based on a correspondence relationship, stored in a storage, between identification information of the client device connected to the information processing apparatus through remote connection and identification information of a device server to which the information processing apparatus is connected when the disconnection is detected by processing circuitry.

10. An information processing program that causes a computer (3) to execute a process comprising:
detecting a disconnection of a remote connection which connects an information processing apparatus to a client devise; and
disconnecting a connection between the information processing apparatus connected through the remote connection from the client device that has requested the disconnection and the device server based on a correspondence relationship, stored in a storage, between identification information of the client device connected to the information processing apparatus through remote connection and identification information of a device server to which the information processing apparatus is connected when the disconnection is detected by processing circuitry.
